# EUROPEAN PATENT APPLICATION

(11) **EP 1 748 364 A1**
(43) Date of publication of application: **31.01.2007**
(21) Application number: 06253798.0
(22) Date of filing: 20.07.2006
(51) Int. Cl.: G06F 13/42

(54) **Electronic apparatus provided with electronic devices for serial communication and serial communication method**

(30) Priority: 25.07.2005 JP 2005213860
(71) Applicant: ORION ELECTRIC CO., Ltd., Fukui 915-8555 (JP)
(72) Inventor: Nishino, Toshio, Echizen-city Fukui 915-8555 (JP)
(74) Representative: Paget, Hugh Charles Edward

(57) **Abstract**

The invention provides an electronic apparatus provided with electronic devices for carrying out data transmission/reception through serial communication, designed to maintain highly efficient data transmission and prevent communication errors. An RDY line 15 which is kept to a high level in a basic condition is provided and when this line is driven low by a transmitting side IC 11, a transmission request is transmitted to a receiving side IC 12 and upon receiving this request, the receiving side IC 12 drives the RDY line 15 to a low level until the own preparations for receiving data are completed, while the transmitting side IC 11 performs no data transmission until the RDY line 15 is driven high after the transmission of the transmission request, and in this way the transmitting side IC 11 and receiving side IC 12 perform a handshake.

## Description

### BACKGROUND OF THE INVENTION

### Field of the Invention

The present invention relates to an electronic apparatus provided with electronic devices which performs data transmission/reception through serial communication, and more particularly, to an electronic apparatus with improved efficiency of serial communication.

### Description of the Related Art

There are many types of electronic apparatuses provided with a plurality of electronic devices (IC or the like) and data needs to be transmitted/received between these electronic devices for the apparatus to operate. When these electronic devices are mounted on a printed circuit board, data transmission lines for mutual data transmission/reception are often constructed of a copper foil pattern formed on the printed circuit board and since the area of the substrate is limited due to requirements such as downsizing of the apparatus and cost reduction, a method of realizing data transmission/reception between electronic devices using a serial communication system is widely adopted (because adopting parallel communication requires many signal lines (which increases the area of the copper foil pattern) and leads to increases in the substrate area and cost)).

Conventional techniques about such a serial communication system are disclosed in Japanese Patent Laid-Open Publications No.5-265948, No.2000-201198, No.2001-127826 and No.2003-187526 (Patent Documents 1 to 4) or the like.

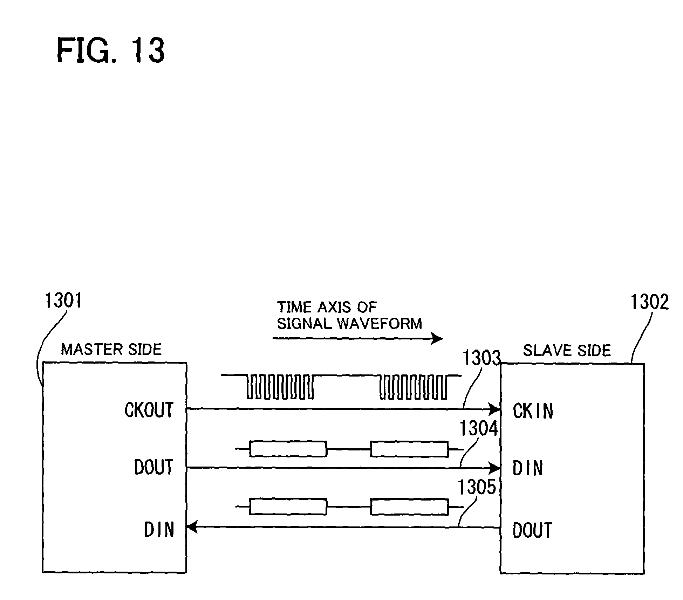

A serial communication system uses signal lines for data transmission (two lines required for full-duplex communication) and signal lines for clock signal transmission for data synchronization as basic components. When a communication is carried out using only these signal lines, as shown in FIG. 13 (an example of timing chart of a conventional serial communication in the above described construction), a slave (receiving) side device 1302 judges a communication period (especially, when receiving is started) based on the presence of a clock signal, and therefore when a pulse is generated due to noise mixed into a clock signal line 1303, the slave side may misidentify the communication period and cause a communication error. Moreover, since no handshake between the master (transmitting) side device 1301 and slave side device 1302 can be realized, if data is sent from the master side device 1301 during a (Busy) period during which the slave side device 1302 is not ready for receiving data, a receiving error may result.

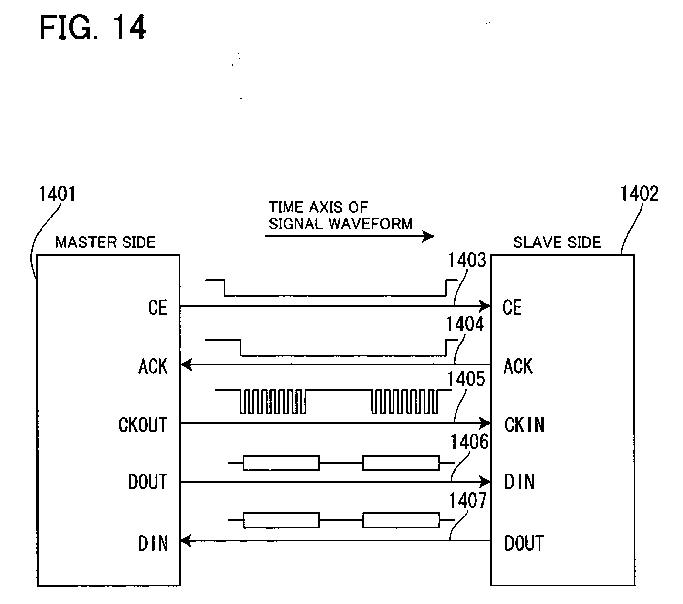

On the contrary, as shown in FIG. 14, there is a method for solving the above described problem by additionally providing a signal line 1403 for declaring a communication period and a signal line 1404 for handshaking, but this method adds two signal lines and also increases the number of terminals of the electronic devices (master side device 1401 and slave side device 1402) and thereby prevents effective utilization of the area of the substrate of the printed circuit board on which those electronic devices are mounted. On the other hand, there is another method without providing any signal line 1403 for declaring a communication period, whereby information indicating a start/end of communication is added before and after data to be transmitted/received on a data transmission signal line 1406 to carry out communication, but in this case, the data transmission efficiency deteriorates.

### SUMMARY OF THE INVENTION

In view of the above described problems, it is an object of the present invention to provide an electronic apparatus provided with electronic devices that carries out data transmission/reception through serial communication, capable of maintaining high efficiency data transmission, preventing communication errors due to misidentification of a communication period or impossibility of handshaking between the transmitting side and receiving side and suppressing increases in the area occupied of a printed circuit board due to an increase in the number of signal lines.

The electronic apparatus provided with electronic devices carrying out serial communication according to aspect 1 is an electronic apparatus provided with electronic devices which mutually carry out data transmission/reception through serial communication, comprising a data transmission line which is a signal line for data transmission/reception and also a control signal transmission line which serves as a signal line for controlling stopping or restarting of transmission between a transmitting side device and a receiving side device, wherein when data transmission/reception is performed between the electronic devices, the control signal transmission line which is kept to a high level or low level in a basic condition is driven low or high by the transmitting side device for at least a predetermined period until a signal reaches the receiving side device, and when the receiving side device detects that the control signal transmission line is set to a low level or high level, if the receiving side device has not completed preparations for receiving of data, the control signal transmission line is driven low or high for a period until the receiving side device completes preparations for receiving of data, and the transmitting side device performs processing of data transmission upon detecting that the control signal transmission line is set to a high level or low level after a lapse of the predetermined period.

According to the above described construction, when the transmitting side device performs data transmission, the control signal transmission line which is kept to a high level (or low level) in a basic condition is driven low (or high) by the transmitting side device for a predetermined period (at least a period until the signal reaches the receiving side device), and therefore the receiving side device can recognize a communication period (time at which communication is started) and when the receiving side device is not ready for receiving data, the control signal transmission line is driven low (or high) until the receiving side device becomes ready for receiving data, and therefore the transmitting side device can judge whether the receiving side device cannot receive data (busy state or the like) (that is, perform a handshake).

The electronic apparatus provided with electronic devices carrying out serial communication according to aspect 2 is the electronic apparatus provided with electronic devices carrying out serial communication according to aspect 1, wherein 1-unit data is transmitted at the time of processing of transmission of the data, and the receiving side device drives the control signal transmission line to a low level or high level when the receiving side device receives the 1-unit data and drives the control signal transmission line to a high level or low level when preparations for receiving of the next data are completed and the transmitting side device performs processing of transmission of the next 1-unit data upon detecting that the control signal transmission line is set to a high level or low level.

According to the above described construction, a handshake is performed between the transmitting side device and receiving side device every time transmission/reception of 1-unit data is performed. The "1-unit data" is determined according to the system construction as appropriate and when, for example, a register has a 16-bit structure, the 16-bit data is regarded as the "1-unit data."

The electronic apparatus provided with electronic devices carrying out serial communication according to aspect 3 is the electronic apparatus provided with electronic devices carrying out serial communication according to aspect 1 or 2, wherein the number of the data transmission lines is set to two, the period until preparations for the receiving of data by the receiving side device are completed is set to a period until preparations for receiving of data and transmission of data by the receiving side device are completed, data is also transmitted from the receiving side device after the control signal transmission line is driven high or low after a lapse of the period and full-duplex communication is thereby performed between the transmitting side device and the receiving side device.

According to the above described construction, when a data transmission request is received from the transmitting side device (when the control signal transmission line is driven low (or high), the receiving side device drives the control signal transmission line to a low level (or high level) for a period until the receiving side device becomes ready for receiving data and transmitting data and drives the control signal transmission line to a high level (or low level) when the receiving side device is ready for data transmission/reception and the receiving side device also performs data transmission, and in this way full-duplex communication is realized between the transmitting side device and receiving side device.

The electronic apparatus provided with electronic devices carrying out serial communication according to aspect 4 is the electronic apparatus provided with electronic devices carrying out serial communication according to aspect 3, wherein the transmitting side device drives the control signal transmission line to a low level or high level when the transmitting side device receives 1-unit data from the receiving side device, drives the control signal transmission line to a high level or low level when preparations for transmission/reception of the next data are completed, and if the control signal transmission line is detected to be set to a high level or low level, both the transmitting side device and the receiving side device perform processing of transmission/reception of 1-unit data.

According to the above described construction, when data is also transmitted from the receiving side device (in the case of full-duplex communication), the transmitting side device drives the control signal transmission line to a low level (or high level) for a period until the transmitting side device becomes ready for receiving data and transmitting data and drives the control signal transmission line to a high level (or low level) when the transmitting side device is ready for data transmission/reception, and in this way a handshake is performed from both the transmitting side device and receiving side device.

The serial communication method according to aspect 5 is a serial communication method between electronic devices, comprising a data transmission line which is a signal line for data transmission/reception and also a control signal transmission line which serves as a signal line for controlling stopping or restarting of transmission between a transmitting side device and a receiving side device, wherein when data transmission/reception is performed between the electronic devices, the control signal transmission line which is kept to a high level or low level in a basic condition is driven low or high by the transmitting side device for at least a predetermined period until a signal reaches the receiving side device, and when the receiving side device detects that the control signal transmission line is set to a low level or high level, if the receiving side device has not completed preparations for receiving of data, the control signal transmission line is driven low or high for a period until the receiving side device completes preparations for receiving of data, and the transmitting side device performs processing of data transmission upon detecting that the control signal transmission line is set to a high level or low level after a lapse of the predetermined period.

The serial communication method according to aspect 6 is the serial communication method according to aspect 5, wherein 1-unit data is transmitted at the time of processing of transmission of the data, and the receiving side device drives the control signal transmission line to a low level or high level when the receiving side device receives the 1-unit data and drives the control signal transmission line to a high level or low level when preparations for receiving of the next data are completed and the transmitting side device performs processing of transmission of the next 1-unit data upon detecting that the control signal transmission line is set to a high level or low level.

The serial communication method according to aspect 7 is the serial communication method according to aspect 5 or 6, wherein the number of the data transmission lines is set to two, the period until preparations for the receiving of data by the receiving side device are completed is set to a period until preparations for receiving of data and transmission of data by the receiving side device are completed, data is also transmitted from the receiving side device after the control signal transmission line is driven high or low after a lapse of the period and full-duplex communication is thereby performed between the transmitting side device and the receiving side device.

### BRIEF DESCRIPTION OF THE DRAWINGS

FIG. 1 is a block diagram showing an overview of parts of an electronic apparatus provided with electronic devices (ICs) according to Embodiment 1 related to the present invention;
FIG. 2 is a timing chart illustrating the concept of serial communication of Embodiment 1;
FIG. 3 is a flow chart showing the concept of processing of the transmitting side device of Embodiment 1 related to the present invention;
FIG. 4 is a flow chart showing the concept of processing of the receiving side device of Embodiment 1 related to the present invention;
FIG. 5 is a block diagram showing an overview of parts of an electronic apparatus provided with electronic devices (ICs) of Embodiment 2 related to the present invention;
FIG. 6 is a timing chart illustrating the concept of serial communication of Embodiment 2;
FIG. 7 is a flow chart showing the concept of processing of the master side device according to Embodiment 2 related to the present invention;
FIG. 8 is a flow chart showing the concept of processing of the slave side device according to Embodiment 2 related to the present invention;
FIG. 9 is a timing chart illustrating the concept of serial communication of Embodiment 3;
FIG. 10 is a flow chart showing the concept of processing of the master side device according to Embodiment 3 related to the present invention;
FIG. 11 is a flow chart continued from FIG. 10;
FIG. 12 is a flow chart showing the concept of processing of the slave side device according to Embodiment 3 related to the present invention;
FIG. 13 is a diagram illustrating the concept of a conventional serial communication system; and
FIG. 14 is a diagram illustrating the concept of another conventional serial communication system.

### DETAILED DESCRIPTION OF THE PREFERRED EMBODIMENTS

Hereinafter, specific embodiments of the present invention will be explained with reference to the attached drawings. The following embodiments are some aspects when the present invention is embodied and are not intended to confine the present invention within the range thereof.

### [Embodiment 1]

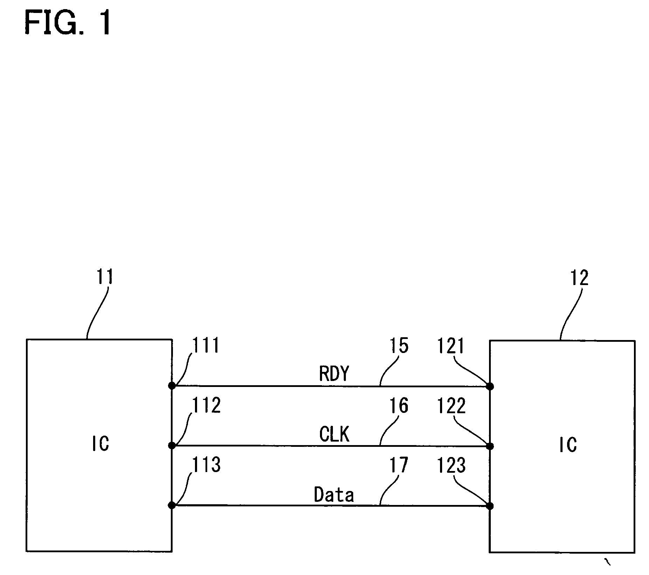

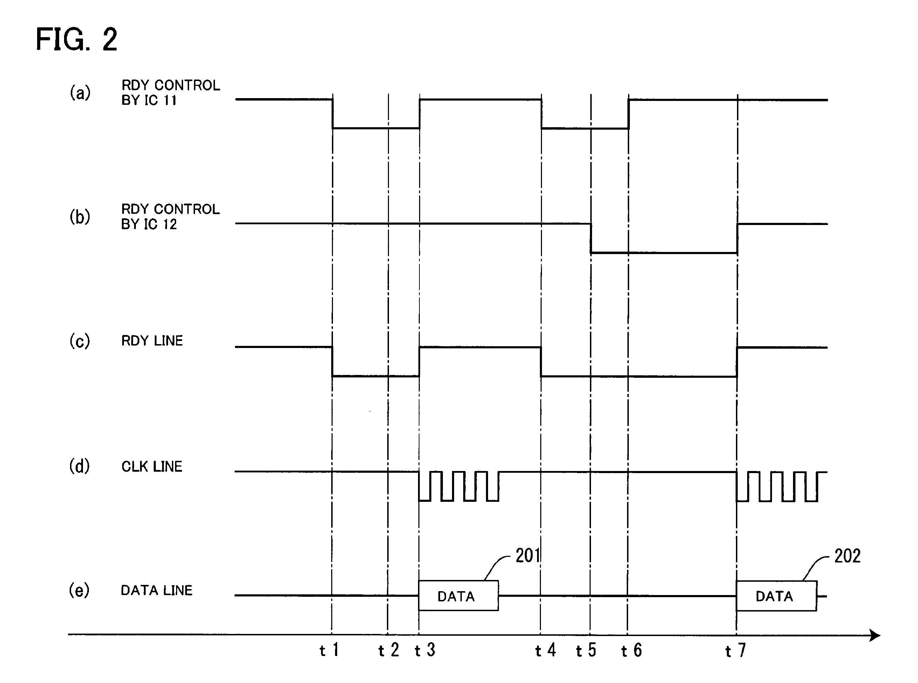

FIG. 1 is a block diagram showing an overview of parts (wiring for carrying out serial communication between ICs) of an electronic apparatus provided with a plurality of electronic devices (IC) of this embodiment related to the present invention. FIG. 2 is a timing chart illustrating the concept of serial communication related to the present invention.

As shown in FIG. 1, the electronic apparatus of this embodiment is provided with a plurality of electronic devices (IC 11, IC 12) and each IC is provided with CLK terminal 112 and CLK terminal 122 to which a clock signal line 16 for transmitting a clock signal to establish data synchronization is connected, Data terminal 113 and Data terminal 123 to which a data transmission line 17 for transmitting data to be transmitted/received is connected, and RDY terminal 111 and RDY terminal 121 to which a control signal transmission line 15 for transmitting a control signal for communication control is connected or the like.

The control signal transmission line 15 according to this embodiment is connected to a constant voltage source (for example, a 5 V power line) or the like through a resistor and is thereby kept to a high level in a basic condition and the IC 11 or IC 12 monitors the voltage level of the control signal transmission line 15 through the RDY terminal 111, RDY terminal 121 and drives the control signal transmission line 15 to a low level as required.

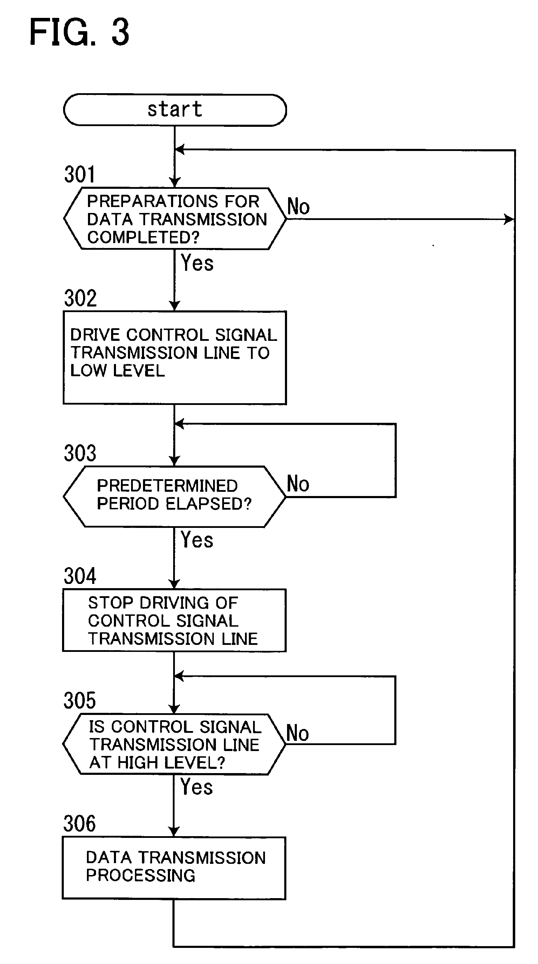

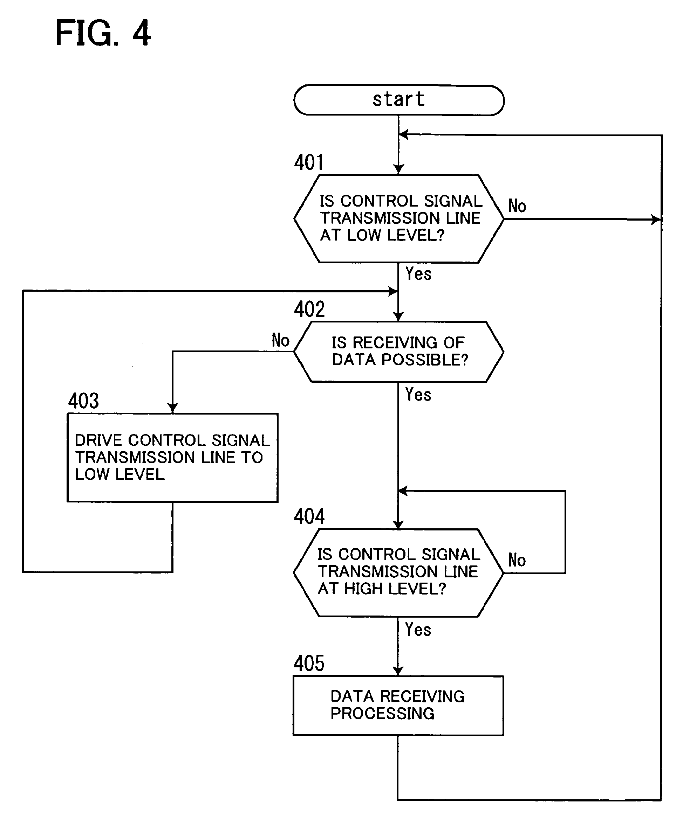

Hereinafter, the concept of operation in data transmission/reception processing between two ICs will be explained assuming that the IC 11 as the transmitting side device and IC 12 as the receiving side device. FIG. 3 is a flow chart showing the concept of processing of parts of the IC 11 which operates as the transmitting side device related to the present invention. FIG. 4 is a flow chart showing the concept of processing of parts of the IC 12 which operates as the receiving side device related to the present invention.

The concept of serial communication related to the present invention will be explained with reference to FIG. 3 and FIG. 4. When a data transmission request is generated in the IC 11 on the transmitting side, the IC prepares for data transmission (processing of storing data to be transmitted in a transmission buffer provided for the IC 11 or the like) and when this is completed (FIG. 3: step 301), the IC 11 drives the control signal transmission line 15 to a low level (step 302). The IC 12 on the receiving side monitors whether or not the control signal transmission line 15 is driven low (that is, the presence/absence of a transmission request from the IC 11) (FIG. 4: step 401), and when this is driven low, the IC 12 judges whether or not the data receiving is possible (for example, whether or not the IC 12 is busy due to other processing or the receiving buffer is empty or the like) (step 402), and if the receiving is not possible, the IC 12 drives the control signal transmission line 15 to a low level until the receiving is made possible (step 402 to step 403).

After the IC 11 drives the control signal transmission line 15 to a low level in step 302, the IC 11 on the transmitting side waits for a predetermined period (period which is not shorter than the period in which the signal at least arrives at the IC 12 (the IC 12 can detect that the control signal transmission line 15 is driven low) and which is predetermined according to the specification or the like of the apparatus) (FIG. 3: step 303) and then the IC 11 stops the low level driving of the control signal transmission line 15 (step 304). Next, it is judged as to whether or not the control signal transmission line 15 is driven high (that is, whether or not the control signal transmission line 15 is driven low by the IC 12, in other words, whether or not the IC 12 is ready for receiving) (step 305), and if the control signal transmission line 15 is at a high level, data transmission processing is carried out (step 306). On the other hand, the IC 12 on the receiving side also judges as to whether or not the control signal transmission line 15 is driven high (FIG. 4: step 404) and if the control signal transmission line 15 is driven high, this means that the IC 11 is carrying out data transmission processing, and therefore data receiving processing is carried out in step 405. After data transmission/reception processing (processing in step 306 (FIG. 3) or step 405 (FIG. 4)), the respective ICs move back to step 301 or step 401 and repeat the above described processing.

Next, the concept of the above described processing will be explained with reference to FIG. 2. FIG. 2 (a) shows the waveform of a control signal for the control signal transmission line 15 by the transmitting side IC 11, FIG. 2 (b) shows the waveform for the control signal transmission line 15 by the receiving side IC 12 and FIG. 2 (c) shows the waveform generated on the control signal transmission line 15 by the control signal by the transmitting side IC 11 and receiving side IC 12. FIG. 2 (d) shows the waveform on the clock signal line 16 and FIG. 2(e) shows timing of data transmission on the data transmission line 17.

At time t1, the transmitting side IC 11 generates a transmission request for data 201 and the transmitting side IC 11 drives the control signal transmission line 15 to a low level for a predetermined period of t1 to t3 (FIG. 3: step 302 to step 303). At time t2, the receiving side IC 12 which detects that the control signal transmission line 15 has been driven low (FIG. 4: step 401) moves to step 404 without driving the control signal transmission line 15 to a low level because data receiving is possible at this time (step 402). At time t3, the transmitting side IC 11 stops the low level driving of the control signal transmission line 15 (FIG. 3: step 304). At this time, since the control signal transmission line 15 is driven high, transmission processing on the data 201 (transmission of a clock signal to the clock signal line 16 and transmission processing on the data 201 to the data transmission line 17) is performed (step 306). Upon detecting that the control signal transmission line 15 is driven high at time t3 (FIG. 4: step 404), the receiving side IC 12 performs data receiving processing (step 405).

When a transmission request for data 202 is generated at time t4, the receiving side IC 12 which detects that the control signal transmission line 15 is driven low at time t5 drives the control signal transmission line 15 to a low level because data receiving is not possible at this time (FIG. 4: step 402 to step 403). At time t6 after a lapse of a "predetermined period" from t4, the transmitting side IC 11 stops the low level driving of the control signal transmission line 15, but since the control signal transmission line 15 is driven low by the receiving side IC 12, the system waits for the control signal transmission line 15 to be driven high in step 305 (FIG. 3). At time t7 at which receiving by the receiving side IC 12 is made possible, when the receiving side IC 12 stops the low level driving of the control signal transmission line 15, the control signal transmission line 15 is driven high and transmission/reception processing on the data 202 is performed (steps 305 and 306 (FIG. 3) and steps 404 and 405 (FIG. 4)).

As described above, according to this embodiment, the receiving side IC 12 can grasp the timing of a data transmission start by the transmitting side IC 11 and the transmitting side IC 11 can judge whether or not the receiving side IC 12 is ready to receive data (can perform a handshake), and therefore it is possible to reduce the occurrence of errors during the data transmission/reception processing. That is, for example, when the presence/absence of data transmission is judged based on the presence/absence of a clock signal as in the conventional example shown in FIG. 13, if a pulse is generated in the clock signal line 1303 due to noise or the like, this may be mistaken for a "start of data transmission", and therefore a communication error may occur, but this embodiment can grasp the data transmission start timing and prevent such errors from occurring. Furthermore, in the conventional example shown in FIG. 13, the master (transmitting) side device 1301 cannot judge whether or not the slave (receiving) side device 1302 is ready to receive data, and therefore when the slave side device 1302 is busy or even when previous data remains in the receiving buffer, data transmission is performed, which may cause the slave side device 1302 to fail to receive data. However, this embodiment allows the transmitting side IC 11 and receiving side IC 12 to realize a handshake and can prevent such receiving errors from occurring.

Furthermore, compared to the case (conventional example shown in FIG. 14) where the "signal line for recognizing a communication period" and the "signal line for a handshake between the transmitting side and receiving side" are formed separately to cope with the above described problem, this embodiment uses fewer signal lines and can thereby minimize the decrease in substrate efficiency (increase in the size of substrate) due to the increase in the number of IC terminals and increase in the number of signal lines. Furthermore, compared to the case where the above described problem is coped with by performing transmission with a control signal added to a data transmission line instead of forming the "signal line for recognizing a communication period" and the "signal line for a handshake between the transmitting side and receiving side", this embodiment eliminates the necessity for sending a control signal through the data transmission line, and can thereby avoid the data transmission efficiency from being reduced caused by the occupation of the data transmission path by the control signal.

In this embodiment, the control signal transmission line 15 is set to "a high level in a basic condition" and driven low by the IC 11 or IC 12 as required so as to transmit a control signal, but it is also possible to reverse the respective positive and negative polarities and set the control signal transmission line 15 to "a low level in a basic condition" (however, in this case, due to restrictions on the drive ((high level drive) capacity of the device, it is necessary to increase the pull-down resistance connected to the control signal transmission line 15, which produces a rising delay of the control signal transmission line 15 and prevents the communication rate (clock frequency) from increasing, and therefore this embodiment is more preferable).

### [Embodiment 2]

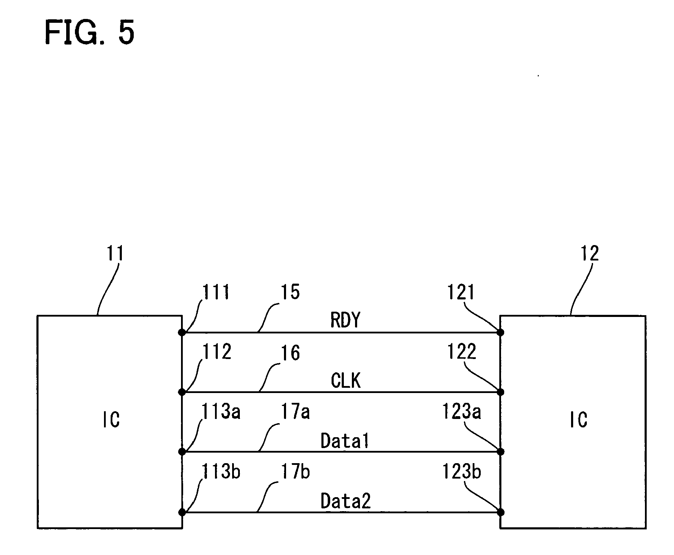

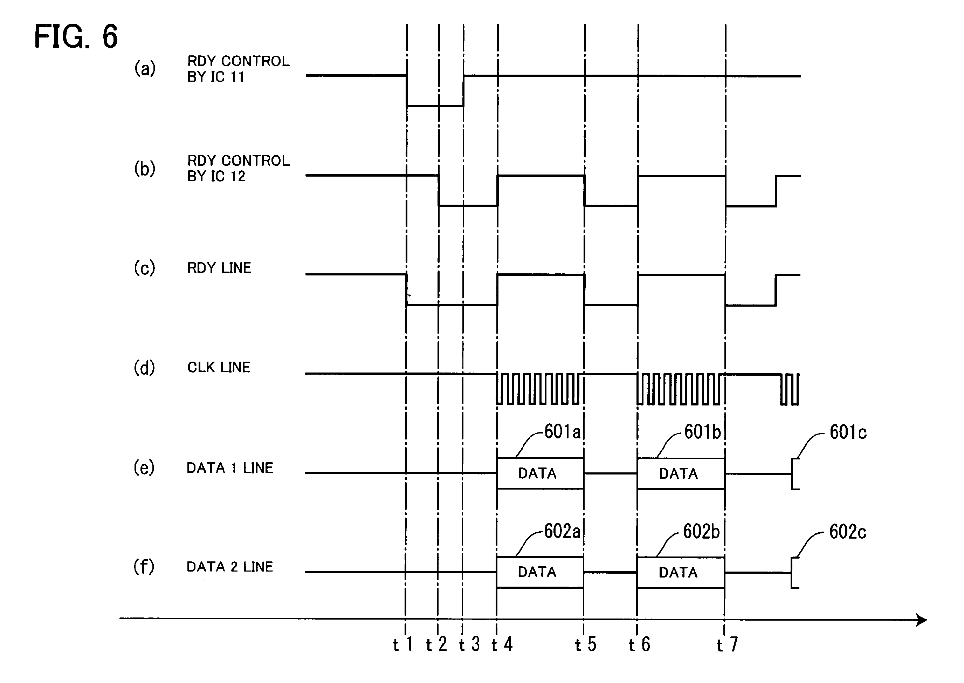

FIG. 5 is a block diagram showing an overview of parts of an electronic apparatus provided with a plurality of electronic devices (ICs) of this embodiment related to the present invention (wiring for realizing serial communication between ICs). FIG. 6 is a timing chart illustrating the concept of serial communication related to the present invention. Components similar to those in Embodiment 1 are assigned the same reference numbers as those in Embodiment 1 and explanations thereof will be omitted here.

As shown in FIG. 5, this embodiment has basically the same configuration as that of Embodiment 1 (FIG. 1), but this embodiment provides two data transmission lines 17 (data transmission lines 17a and 17b) so as to realize full-duplex communication between an IC 11 and an IC 12.

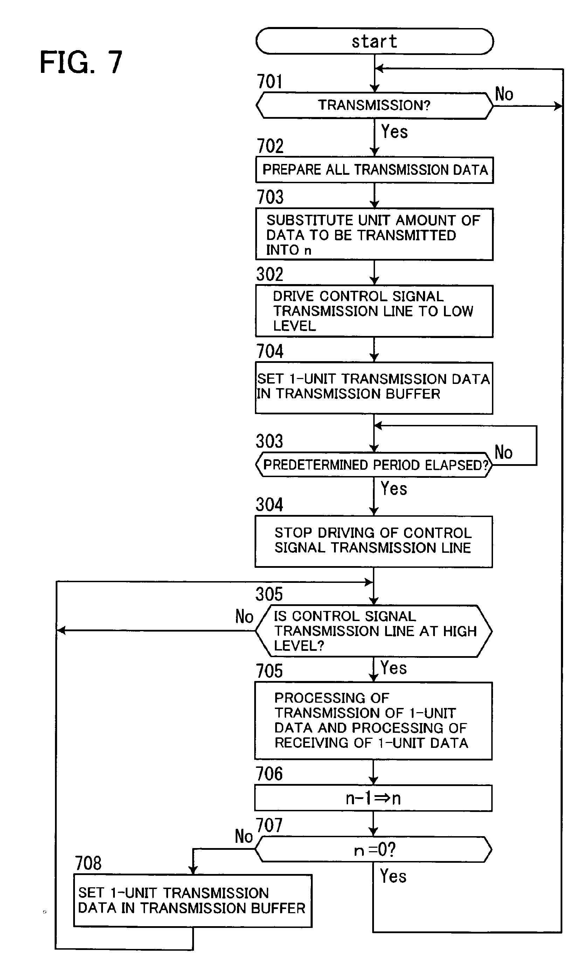

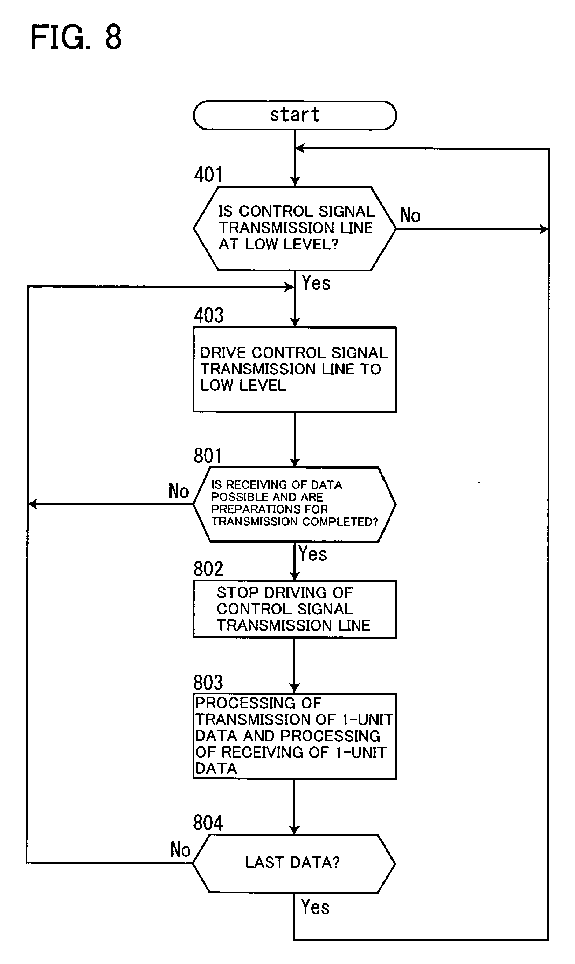

Hereinafter, the concept of operation of data transmission/reception processing between the two ICs will be explained assuming that the IC 11 is a master (transmitting) side device and the IC 12 as a slave (receiving) side device. FIG. 7 is a flow chart showing the concept of processing of parts of the IC 11 which is the master side device related to the present invention. FIG. 8 is a flow chart showing the concept of processing of parts of the IC 12 which is the slave side device related to the present invention. For the processing concept similar to that of Embodiment 1 (FIG. 3 or FIG. 4), the same reference numbers as those in Embodiment 1 are used and explanations thereof will be omitted or simplified here.

In step 701 (FIG. 7), the system waits for the master side IC 11 to generate a data transmission request and when such a request is generated, the system prepares for all transmission data in step 702 and substitutes the unit amount of all the transmission data (since data corresponding to 8 bits (1 byte) is considered as "one unit" in this embodiment, if the amount of data in all the transmission data is, for example, 56 bits, the "unit amount" becomes 7) into a variable "n. " In next step 302, a control signal transmission line 15 is driven low, and then transmission data corresponding to 1 unit (1 byte) is stored in a transmission buffer (not shown) provided for the IC 11 (step 704), after a wait for a predetermined period after the control signal transmission line 15 is driven low (step 303), the low level driving is stopped (step 304). It is also possible to adopt processing of driving the control signal transmission line 15 to a low level after "storing 1-unit transmission data in a transmission buffer" (that is, the preparation for transmission is completed) (step 704 is performed before step 302), but this embodiment performs the processing of "storing 1-unit transmission data in a transmission buffer" during a standby time in step 303 after the control signal transmission line 15 is driven low to thereby improve the processing efficiency.

The slave side IC 12 monitors the level of the control signal transmission line 15 (FIG. 8: step 401) and upon detecting a low level, it drives the control signal transmission line 15 to a low level in step 403 (the slave side IC 12 always drives the control signal transmission line 15 to a low level regardless of whether or not receiving of data is possible), judges whether or not receiving of data is possible and whether or not preparations for data transmission from the slave side IC 12 side are completed (step 801) and drives the control signal transmission line 15 to a low level until the preparations are completed (step 403 to step 802).

In step 305 (FIG. 7) when the control signal transmission line 15 is judged to be at a high level, the master side IC 11 moves to step 705, carries out transmission/reception processing of data corresponding to 1 unit, decrements n in next step 706, judges whether or not n becomes 0 (that is, whether or not the transmission of all transmission data is completed) (step 707) and if n is not 0, transmission data corresponding to the next 1 unit is set in the transmission buffer in step 708, the IC 11 moves back to step 305 and repeats the processing. On the other hand, when the judgment in step 707 is positive (transmission of all data is completed), the IC 11 moves back to step 701 and repeats the processing.

When carrying out processing of stopping the low level driving of the control signal transmission line 15 in step 802 (FIG. 8) (that is, when the control signal transmission line 15 is driven high and transmission of a clock signal and data from the master side IC 11 is started), the slave side IC 12 carries out processing of transmission (data transmission is performed in synchronization with the clock signal from master side IC 11) and processing of receiving of 1-unit data (step 803), judges in next step 804 as to whether the received data is the last data or not, moves back to step 403 and repeats the processing if the received data is not the last data, or moves back to step 401 and repeats the processing if the received data is the last data and repeats the processing. The "judgment as to whether data is the last data or not" may also be made by the master side IC 11 transmitting data with such information added to the last data and by the slave side IC 12 judging this or the judgment may also be made by the master side IC 11 transmitting a unit amount (value of n) of data to be transmitted to the slave side IC 12 and by the slave side IC 12 side carrying out processing similar to that in step 706 and step 707 in FIG. 7.

Next, the concept of the above described processing will further be explained with reference to FIG. 6. At time t1, the master side IC 11 generates a transmission request for data 601 and the master side IC 11 drives the control signal transmission line 15 to a low level for a predetermined period of t1 to t3. At time t2, the slave side IC 12 which detects that the control signal transmission line 15 is driven low drives the control signal transmission line 15 to a low level until t4 by which preparations for receiving of data and transmission of data are completed (FIG. 8: step 801 and step 403). Regardless of whether data transmission/reception is possible or not, the slave side IC 12 necessarily drives the control signal transmission line 15 to a low level until at least t3 ("predetermined period") elapses. At time t3 which is the "predetermined period" later than t1, the master side IC 11 stops the low level driving of the control signal transmission line 15, but since the slave side IC 12 drives the control signal transmission line 15 to the low level, the system waits for the control signal transmission line 15 to be driven high in step 305 (FIG. 7). At time t4 at which the slave side IC 12 is enabled to perform transmission/reception, if the slave side IC 12 stops the low level driving of the control signal transmission line 15, the control signal transmission line 15 is driven high and processing of transmission/reception of 1-unit data (data 601a and data 602a) is performed.

The slave side IC 12 which has performed the processing of receiving and transmission of 1-unit data (data 601a and data 602a) drives the control signal transmission line 15 to a low level until t6 by which preparations for receiving and transmission of the next data are completed (FIG. 8: step 801 and step 403). Here, the slave side IC 12 also necessarily drives the control signal transmission line 15 to a low level (FIG. 8: step 403) regardless of whether data transmission/reception is possible or not. The master side IC 11 waits until preparations for transmission/reception by the slave side IC 12 are completed (FIG. 7: step 305), and at time t6 when the control signal transmission line 15 is driven high, the master side IC 11 performs processing of transmission/reception of 1-unit data (data 601b and data 602b). Hereinafter, by repeating similar processing, the master side IC 11 carries out processing of transmission/reception of the data 601 and data 602.

As described above, according to this embodiment, while minimizing the increase in the number of signal lines, it is possible to realize full-duplex transmission between two devices (ICs) while preventing communication errors from occurring, and thereby realize the excellent efficiency of utilizing the substrate area and highly efficient data transmission/reception. Furthermore, since a handshake is performed between the transmitting side device and receiving side device every time 1-unit data transmission/reception is carried out, it is possible to further improve the reliability of communication. As with Embodiment 1, when the receiving side IC 12 is ready to receive data, processing of not driving the control signal transmission line 15 to a low level may also be possible (FIG. 4: steps 402 and 403), but in this case, in the actual system, the transmitting side IC 11 needs to monitor the control signal transmission line 15 through polling (because it is necessary to confirm that the control signal transmission line 15 is not at a low level) and when at least a certain time is required as the polling interval to meet the specification of the device (IC 11), it is not possible to make the transmission/reception interval of 1-unit data shorter. On the contrary, as in the case of this embodiment (as shown in FIG. 6), if the receiving side IC 12 performs processing of driving the control signal transmission line 15 to a low level, it is possible for the transmitting side IC 11 to designate the RDY terminal 111 as a "terminal for external interrupt" (interrupt is generated at a rising edge) (which eliminates the necessity for monitoring through polling) and avoid the above described restrictions, and therefore in the case of such a device (IC 11) that "requires at least a certain time as a polling interval to meet the specification", it is possible to realize faster data transmission/reception processing than the system of Embodiment 1.

### [Embodiment 3]

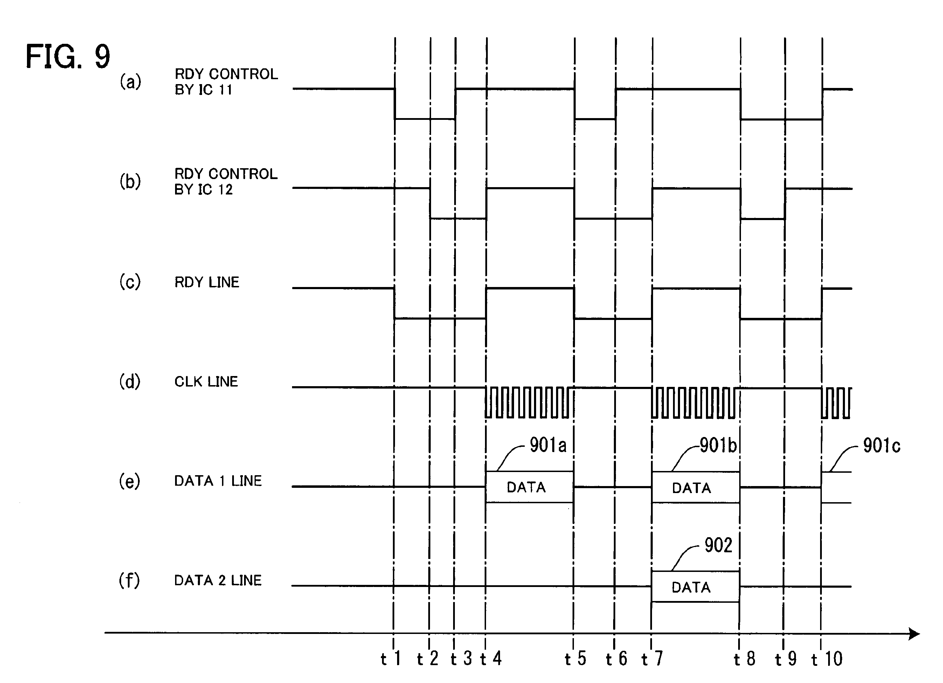

FIG. 9 is a timing chart illustrating the concept of serial communication related to the present invention. An overview of the construction of an electronic apparatus provided with a plurality of electronic devices (ICs) of this embodiment is similar to that of Embodiment 2 (FIG. 5) and will be explained with reference to FIG. 5 as required.

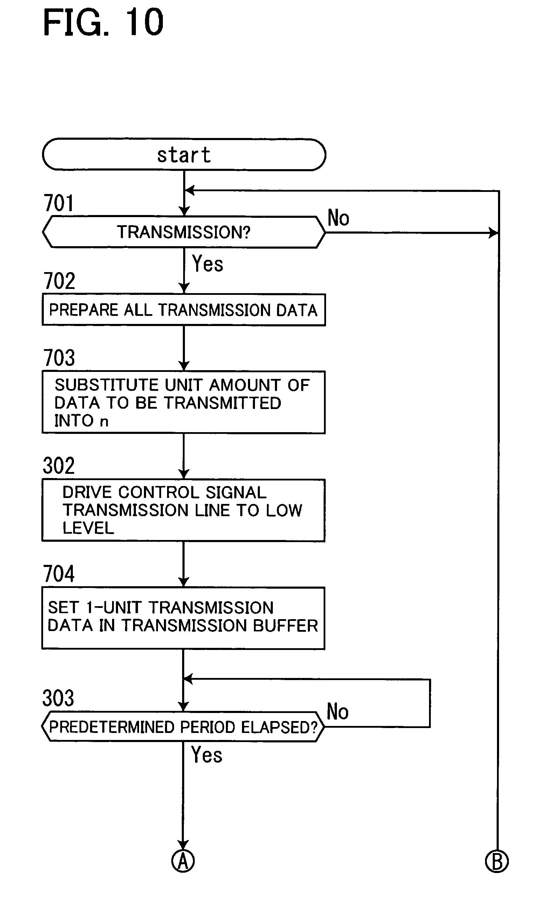

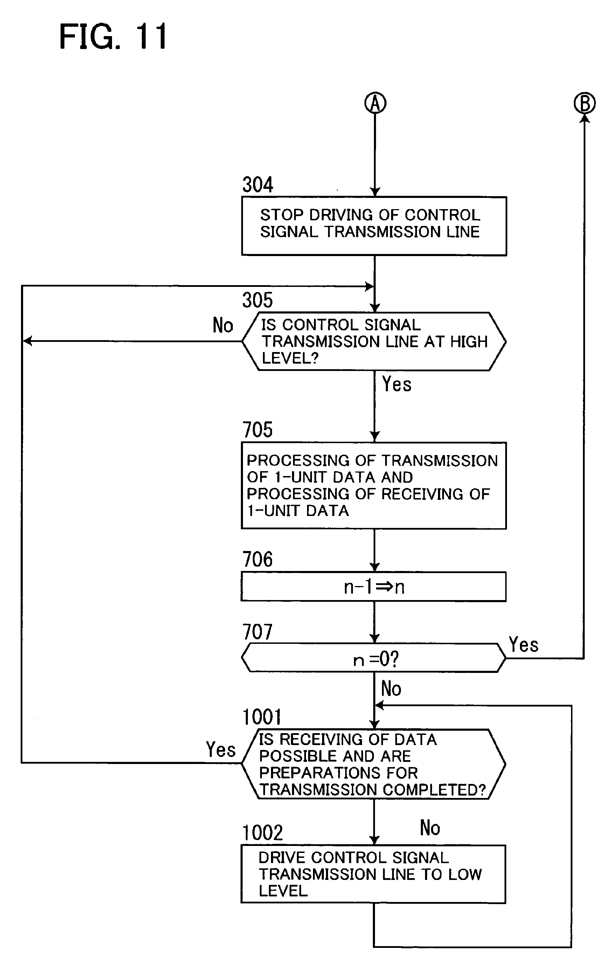

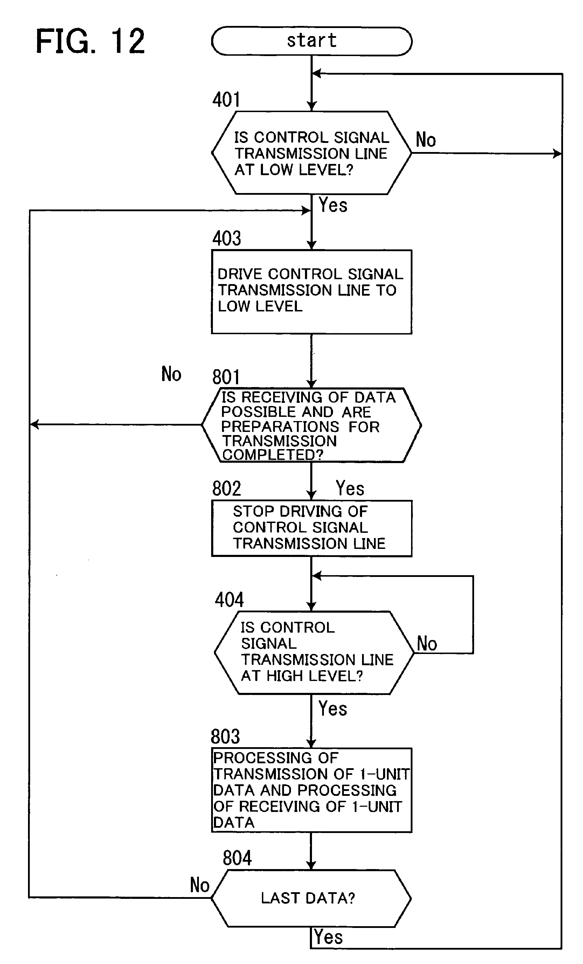

Hereinafter, the concept of operation of data transmission/reception processing between two ICs will be explained assuming that the IC 11 (FIG. 5) is a master (transmitting) side device and IC 12 as a slave (receiving) side device. FIG. 10 and FIG. 11 are flow charts showing the concept of processing of parts of the IC 11 which is the master side device related to the present invention. FIG. 12 is a flow chart showing the concept of processing of parts of the IC 12 which is the slave side device related to the present invention. For the processing concept similar to that of Embodiment 1 (FIG. 3 or FIG. 4) or Embodiment 2 (FIG. 7 or FIG. 8), the same reference numbers as those in Embodiment 1 or Embodiment 2 are used and explanations thereof will be omitted or simplified here.

The processing (FIG. 10 and FIG. 11) by the master side IC 11 is basically similar to that in Embodiment 2 (FIG. 7), but when a judgment in step 707 (FIG. 11) is negative (there still remains data to be transmitted), the master side IC 11 judges in step 1001 whether receiving of data is possible or not (whether a data fetch from a receiving buffer is completed or not (whether the receiving buffer of the master side IC 11 has free space or not) or whether the master side IC 11 is busy with other processing or not or the like) and whether the master side IC 11 has completed preparations for data transmission or not (processing of setting 1-unit data in the transmission buffer or the like) and the master side IC 11 drives the control signal transmission line 15 to a low level (step 1002) until the preparations are completed. When the judgment in step 1001 is positive (preparations for data transmission/reception are completed), the process moves to step 305 and repeats the processing.

The processing by the slave side IC 12 (FIG. 12) is basically similar to that of Embodiment 2 (FIG. 8), but after processing of stopping the low level driving of the control signal transmission line 15 (step 802) when the judgment in step 801 is positive (the preparations for transmission/reception by the slave side IC 12 are completed), the system waits for the control signal transmission line 15 to be driven high in step 404 and moves to step 803 after the control signal transmission line 15 is driven high. The slave side IC 12 does not perform data transmission processing every time and when there is no data transmission, only processing of making preparations for data receiving is performed in the processing in step 801 (FIG. 12) and, only data receiving processing is likewise performed in step 803. Therefore, even in step 705 of the master side IC 11 (FIG. 11), only data transmission processing may be performed.

With reference to FIG. 9, the concept of the above described processing will be further explained. The concept of the processing from time t1 to t4 is similar to that in Embodiment 2 (FIG. 6). In FIG. 9, there is no data transmission from the slave side IC 12 during transmission of the first 1-unit data (data 901a). When the processing of transmission/reception of the first 1-unit data is completed (time t5), both the master side IC 11 and slave side IC 12 make preparations for transmission/reception of the next 1-unit data and drive the control signal transmission line 15 to a low level until the preparations are completed (FIG. 11: step 1001 and step 1002 and FIG. 12: step 801 to step 403). At time t6, the preparations by the master side IC 11 are completed and the low level driving by the master side IC 11 is completed, but since the low level driving by the slave side IC 12 still continues, the control signal transmission line 15 is kept to the low level. At time t7, the preparations by the slave side IC 12 are also completed and the low level driving by the slave side IC 12 is also completed, and therefore the control signal transmission line 15 is driven high and both the master side IC 11 and slave side IC 12 perform processing of transmission/reception of 1-unit data (data 901b and data 902) (FIG. 11: step 705 via step 305 and FIG. 12: step 803 via step 404).

At time t8 when the processing of transmission/reception of 1-unit data is completed, both the master side IC 11 and slave side IC 12 make preparations for next 1-unit data transmission/reception and drive the control signal transmission line 15 to a low level until the preparations are completed. At time t9, the slave side IC 12 completes preparations for transmission/reception first and performs processing of transmission/reception of 1-unit data at time t10 when the preparations by the master side IC 11 are completed. Hereinafter, the processing of data transmission/reception will be carried out by repeating the above described processing.

As described above, according to this embodiment, since a handshake is performed from both the transmitting side device (IC 11) and receiving side device (IC 12) (the slave side IC 12 can also judge the state of the master side IC 11 (whether transmission/reception is possible or not), it is possible to improve the reliability of communication.

The effects of the present invention are as follows.

According to the electronic apparatus provided with electronic devices carrying out serial communication according to aspect 1, which is an electronic apparatus provided with a plurality of electronic devices which mutually carry out data transmission/reception through serial communication, comprising a data transmission line which is a signal line for data transmission/reception and also a control signal transmission line which serves as a signal line for controlling stopping or restarting of transmission between a transmitting side device and a receiving side device, wherein when data transmission/reception is performed between the electronic devices, the control signal transmission line which is kept to a high level or low level in a basic condition is driven low or high by the transmitting side device for at least a predetermined period until a signal reaches the receiving side device, and when the receiving side device detects that the control signal transmission line is set to a low level or high level, if the receiving side device has not completed preparations for receiving of data, the control signal transmission line is driven low or high for a period until the receiving side device completes preparations for receiving of data, and the transmitting side device performs processing of data transmission upon detecting that the control signal transmission line is set to a high level or low level after a lapse of the predetermined period, when the transmitting side device performs data transmission, the receiving side device can recognize a communication period (time at which communication is started) and a handshake can be performed between the transmitting side device and receiving side device, and therefore it is possible to prevent communication errors due to noise or the like from occurring, construct the "signal line for recognizing a communication period" and the "signal line for realizing a handshake between the transmitting side and receiving side" using a single signal line (control signal transmission line) and thereby minimize a reduction of the substrate efficiency due to an increase in the number of signal lines. Furthermore, since there is no necessity for sending a control signal through the data transmission line, it is possible to prevent any reduction of the data transmission efficiency caused by the data transmission path being occupied by the control signal.

According to the electronic apparatus provided with electronic devices carrying out serial communication according to aspect 2, which is the electronic apparatus provided with electronic devices carrying out serial communication according to aspect 1, wherein 1-unit data is transmitted at the time of processing of transmission of the data, and the receiving side device drives the control signal transmission line to a low level or high level when the receiving side device receives the 1-unit data and drives the control signal transmission line to a high level or low level when preparations for receiving of the next data are completed and the transmitting side device performs processing of transmission of the next 1-unit data upon detecting that the control signal transmission line is set to a high level or low level, a handshake is performed between the transmitting side device and receiving side device every time transmission/reception of 1-unit data is performed, and therefore it is possible to further improve the reliability of communication.

According to the electronic apparatus provided with electronic devices carrying out serial communication according to aspect 4, which is the electronic apparatus provided with electronic devices carrying out serial communication according to aspect 3, wherein the transmitting side device drives the control signal transmission line to a low level or high level when the transmitting side device receives 1-unit data from the receiving side device, drives the control signal transmission line to a high level or low level when preparations for transmission/reception of the next data are completed, and if the control signal transmission line is detected to be set to a high level or low level, both the transmitting side device and the receiving side device perform processing of transmission/reception of 1-unit data, in the case of full-duplex communication, a handshake is performed from both the transmitting side device and receiving side device, and therefore it is possible to further improve the reliability of communication.

## Claims

1. An electronic apparatus provided with a plurality of electronic devices which mutually carry out data transmission/reception through serial communication, comprising a data transmission line which is a signal line for data transmission/reception and also a control signal transmission line which serves as a signal line for controlling stopping or restarting of transmission between a transmitting side device and a receiving side device,
wherein when data transmission/reception is performed between the electronic devices, the control signal transmission line which is kept to a high level or low level in a basic condition is driven low or high by the transmitting side device for at least a predetermined period until a signal reaches the receiving side device, and when the receiving side device detects that the control signal transmission line is set to a low level or high level, if the receiving side device has not completed preparations for receiving of data, the control signal transmission line is driven low or high for a period until the receiving side device completes preparations for receiving of data, and the transmitting side device performs processing of data transmission upon detecting that the control signal transmission line is set to a high level or low level after a lapse of the predetermined period.

2. The electronic apparatus provided with electronic devices carrying out serial communication according to claim 1, wherein 1-unit data is transmitted at the time of processing of transmission of the data, and the receiving side device drives the control signal transmission line to a low level or high level when the receiving side device receives the 1-unit data and drives the control signal transmission line to a high level or low level when preparations for receiving of the next data are completed and the transmitting side device performs processing of transmission of the next 1-unit data upon detecting that the control signal transmission line is set to a high level or low level.

3. The electronic apparatus provided with electronic devices carrying out serial communication according to claim 1 or 2,
wherein the number of the data transmission lines is set to two, the period until preparations for the receiving of data by the receiving side device are completed is set to a period until preparations for receiving of data and transmission of data by the receiving side device are completed, data is also transmitted from the receiving side device after the control signal transmission line is driven high or low after a lapse of the period and full-duplex communication is thereby performed between the transmitting side device and the receiving side device.

4. The electronic apparatus provided with electronic devices carrying out serial communication according to claim 3, wherein the transmitting side device drives the control signal transmission line to a low level or high level when the transmitting side device receives 1-unit data from the receiving side device, drives the control signal transmission line to a high level or low level when preparations for transmission/reception of the next data are completed, and if the control signal transmission line is detected to be set to a high level or low level, both the transmitting side device and the receiving side device perform processing of transmission/reception of 1-unit data.

5. A serial communication method between electronic devices, comprising a data transmission line which is a signal line for data transmission/reception and also a control signal transmission line which serves as a signal line for controlling stopping or restarting of transmission between a transmitting side device and a receiving side device,
wherein when data transmission/reception is performed between the electronic devices, the control signal transmission line which is kept to a high level or low level in a basic condition is driven low or high by the transmitting side device for at least a predetermined period until a signal reaches the receiving side device, and when the receiving side device detects that the control signal transmission line is set to a low level or high level, if the receiving side device has not completed preparations for receiving of data, the control signal transmission line is driven low or high for a period until the receiving side device completes preparations for receiving of data, and the transmitting side device performs processing of data transmission upon detecting that the control signal transmission line is set to a high level or low level after a lapse of the predetermined period.

6. The serial communication method according to claim 5,
wherein 1-unit data is transmitted at the time of processing of transmission of the data, and the receiving side device drives the control signal transmission line to a low level or high level when the receiving side device receives the 1-unit data and drives the control signal transmission line to a high level or low level when preparations for receiving of the next data are completed and the transmitting side device performs processing of transmission of the next 1-unit data upon detecting that the control signal transmission line is set to a high level or low level.

7. The serial communication method according to claim 5 or 6,
wherein the number of the data transmission lines is set to two, the period until preparations for the receiving of data by the receiving side device are completed is set to a period until preparations for receiving of data and transmission of data by the receiving side device are completed, data is also transmitted from the receiving side device after the control signal transmission line is driven high or low after a lapse of the period and full-duplex communication is thereby performed between the transmitting side device and the receiving side device.
